# EUROPÄISCHE PATENTSCHRIFT

(11) **EP 1 940 920 B1**
(45) Veröffentlichungstag und Bekanntmachung des Hinweises auf die Patenterteilung: **22.04.2009**
(21) Anmeldenummer: 06807260.2
(22) Anmeldetag: 13.10.2006
(51) Int. Cl.: C08G 77/445

(54) **POLYESTER-POLYSILOXAN-COPOLYMERE UND VERFAHREN ZU DEREN HERSTELLUNG**
POLYESTER-POLYSILOXANE COPOLYMERS AND PROCESS FOR THEIR PREPARATION
COPOLYMERE POLYESTER-POLYSILOXANE ET SON PROCEDE DE FABRICATION

(30) Priorität: 27.10.2005 DE 102005051579
(43) Veröffentlichungstag der Anmeldung: 09.07.2008
(73) Patentinhaber: Wacker Chemie AG, 81737 München (DE)
(72) Erfinder: SCHÄFER, Oliver, 84489 Burghausen (DE); BACHMAIER, Sandra, A-5142 Eggelsberg (AT)
(74) Vertreter: Fritz, Helmut
(86) Internationale Anmeldenummer: PCT/EP2006/067397
(87) Internationale Veröffentlichungsnummer: WO 2007/048718

(56) Entgegenhaltungen:
- US-A- 3 701 815
- US-A- 4 608 421
- US-A- 4 663 413
- US-A- 5 227 435
- US-A1- 2005 136 267

## Beschreibung

Die Erfindung betrifft ein Verfahren zur Herstellung von Polyester-Polysiloxan-Copolymeren.

Polyester-Polysiloxan-Copolymere sind beispielsweise aus den Patentschriften US 4,663,413**,** US 4,963,595 und US 5,235,003 bekannt. Spezielle Ausführungsformen dieser Produktklasse sind ebenfalls von Muelhaupt et al. in Angew. Makromol. Chem. 223 (1994) 47 - 60, Polym. Mater. Sci. Eng. 70 (1993) 4 und J. Appl. Polym. Sci. 54(6) (1994) 815 - 26 beschrieben.

Die Herstellung dieser Produkte gemäß dem Stand der Technik erfolgt durch ringöffnende Polymerisation cyclischer Ester, wie beispielsweise ε-Caprolacton, unter Einwirkung von Katalysatoren, wie beispielsweise Salze des Zinns. Ausgangsprodukte hierfür sind Hydroxyalkylsiloxane oder auch Aminoalkylsiloxane.

Die entsprechenden Hydroxyalkylsiloxane können beispielsweise durch Äquilibrierungsreaktionen funktioneller Dimere mit cyclischen Siloxanen oder Hydrosilylierungsreaktionen von Si-H-funktionellen Siloxanen gewünschter Architektur und Kettenlänge mit Alkyenyl-funktionellen Alkoholen oder Aminen erhalten werden. Dabei ist die Qualität des Endproduktes hinsichtlich Funktionalisierungsgrad, chemischer Reinheit und Verunreinigungen stark vom verwendeten Reaktionsweg abhängig.

Die Äquilibrierungsreaktionen funktioneller Dimere mit cyclischen Siloxanen ist nur für die Amino-funktionellen Siloxan-Edukte gangbar. Hydroxy-funktionelle Siloxane können dagegen nicht in ausreichender Reinheit über Äquilibrierungsreaktionen hergestellt werden, da sich während der Äquilibrierungsreaktion Carbinol-Gruppen in Si-O-C- Gruppen umwandeln unter Verlust der Carbinol-Funktion. Auf diesem Äquilibrierungsweg hergestellte Siloxane lassen weiterhin nur eingeschränkte Produktarchitekturen zu. So ist hier die Herstellung von Siloxan-Polyester Copolymeren mit einer A-B Blockstruktur nicht möglich.

Die Hydrosilylierung von Si-H-funktionellen Siloxanen mit Alkyenyl-funktionellen Alkoholen oder Aminen, die für gegenwärtig kommerziell verfügbare Produkte verwendet wird, hat den Nachteil, dass bei der Hydrosilylierungsreaktion Nebenreaktionen unter Wasserstoffabspaltung auftreten können, welche unter Ausbildung von Si-N-C oder Si-O-C-Gruppen zu unreaktiven Alkenyl-Endgruppen führen, die keine ringöffnende Polymerisation von cyclischen Estern mehr initiieren können und daher zu Verringerung der Produktqualität führen. Hier ist ferner nachteilig, dass funktionelle Gruppen in der Siloxankette, wie beispielsweise Vinyl-Gruppen, bei diesem Verfahrensweg nicht toleriert werden und beispielsweise unter Vernetzung abreagieren.

Ein weiterer Nachteil der bisher verwendeten Techniken zur Herstellung der Amino-funktionellen oder Carbinol-funktionellen Siloxane als Ausgangsstoff zur Herstellung der Polycaprolacton-Siloxan-Polycaprolactone liegt in der generellen Verwendung Si-H funktioneller Verbindungen begründet, die einerseits eine gleichzeitige Verwendung vinyl-subtituierter Siloxane nicht gestatten, andererseits aber aufgrund des hohen Preises entsprechender Si-H funktioneller Silane oder Siloxane als Ausgangsverbindungen einen deutlich nachteiligen Einfluss auf die Herstellkosten des Endproduktes Polycaprolacton-Siloxan-Polycaprolacton haben.

Aufgabe der vorliegenden Erfindung war es im Lichte des zuvor beschriebenen Stands der Technik, ein Verfahren zur Herstellung von Polyester-Polysiloxan-Copolymeren zur Verfügung zu stellen, das einerseits variabel hinsichtlich gewünschter Polymerstrukturen, wie beispielsweise A-B oder A-B-A Blockcopolymeren, ist, und gleichzeitig gegebenenfalls die Einführung von funktionellen Gruppen, wie beispielsweise Alkenylgruppen in der Siloxan-Hauptkette, toleriert und zusätzlich ökonomische Vorteile hat, dabei aber eine möglichst hohe chemische Reinheit der gewünschten Produkte ermöglicht.

Überraschend wurde nun gefunden, dass bei der Verwendung von Aminoalkyl- oder Hydroxyalkyl-funktionellen Siloxanen, die durch Reaktion von funktionellen Siloxanen oder Silazanen mit Si-OH funktionellen Siloxanen hergestellt wurden, alle Erfordernisse eines flexiblen Prozesses, der sowohl zu A-B-A als auch zu A-B-Strukturen führen kann, sowie auch zusätzlich funktionelle Gruppen in der Siloxankette toleriert, erfüllt werden. Durch die Verwendung der Si-OH funktionellen Siloxane als Siloxankomponente, welche deutlich einfacher und kostengünstiger hergestellt werden können, sind die Herstellaufwendungen für die Endprodukte Polycaprolacton-Siloxan-Polycaprolactone deutlich minimiert.

Dieses Verfahren zur Funktionalisierung von Siliconen mit organofunktionellen Gruppen hat weiterhin den Vorteil, dass es sowohl zu Aminoalkyl-funktionellen Siloxanen, wie beispielsweise in DE 100 51 886 C1 und DE 103 03 693 A1 beschrieben, als auch zu Hydroxyalkyl-funktionellen Verbindungen, wie beispielsweise in DE 101 09 842 A1 beschrieben, führt. Hierbei kann man sowohl monofunktionelle Siloxane, als auch bifunktionelle Siloxane oder multifunktionelle Siliconharze oder Kieselsäuren herstellen.

Dabei geht man von Si-OH-funktionellen Siloxanen aus, die man einfach und in hoher Reinheit zu den gewünschten organofunktionellen Siloxanen umwandeln kann. Funktionelle Gruppen, wie beispielsweise Vinyl-Gruppen, in der Siloxan-Kette sind dabei sowohl bei Hydroxyalkyl-funktionellen als auch bei Aminoalkyl-funktionellen Siloxanen leicht erhältlich.

Gleichzeitig sind die als Edukt verwendeten Si-OH-funktionellen Siloxane in großen Mengen zu relativ günstigen Preisen in einer großen Variabilität verfügbar, so dass die so hergestellten Siloxane einen idealen Baustein für die Herstellung von Siloxan-Polyester-Copolymeren darstellen.

Gegenstand der Erfindung ist daher ein Verfahren zur Herstellung von Polyester-Polysiloxan-Blockcopolymeren der allgemeinen Formel (I),

(A)ₐB (I)

worin
- **a**: eine ganze Zahl ≥ 1,
- **A**: eine Polyestereinheit der allgemeine Formel (II) bedeutet

H-[O-(CR¹₂)ₙ-CO-]ₘ-X-R²- (II)

worin
- **X**: Sauerstoff oder **NR^{x},**
- **R¹**: gleiche oder verschiedene, monovalente, substituierte oder unsubstituierte Kohlenwasserstoffreste oder Wasserstoff,
- **R²**: bivalente, substituierte oder unsubstituierte organische Kohlenwasserstoffreste mit 1 bis 40 Kohlenstoffatomen, wobei einzelne Kohlenstoffatome durch Sauerstoffatome ersetzt sein können,
- **R^{x}**: monovalente, substituierte oder unsubstituierte Kohlenwasserstoffreste mit 1 bis 20 Kohlenstoffatomen, wobei einzelne Kohlenstoffatome durch Sauerstoffatome ersetzt sein können, Wasserstoff oder -SiR'₂-R²-NR^{x}, worin **R'** gleiche oder verschiedene, monovalente, substituierte oder unsubstituierte Kohlenwasserstoffreste bedeuten,
- **n**: eine ganze Zahl von 3 bis 10 und
- **m**: eine ganze Zahl von 1 bis 1000
bedeuten, und
**B** eine Polysiloxaneinheit der allgemeinen Formel (III) bedeutet

R³₂SiO_{2/2})ₚ(R³₃SiO_{1/2})_{q}[O_{1/2}H]ᵣ[O_{1/2}SiR⁴₂]ₜ (III),

worin
- **R³**: gleiche oder verschiedene, substituierte oder unsubstituierte, aliphatisch gesättigte oder ungesättigte, lineare, cyclische oder verzweigte Kohlenwasserstoff- oder Kohlenwasserstoffoxyreste mit 1 bis 20 Kohlenstoffatomen oder substituierte oder unsubstituierte aromatische Kohlenwasserstoff- oder Kohlenwasserstoffoxyreste mit 6 bis 20 Kohlenstoffatomen,
- **R⁴**: gleiche oder verschiedene, substituierte oder unsubstituierte, aliphatisch gesättigte , lineare, cyclische oder verzweigte Kohlenwasserstoff- oder Kohlenwasserstoffoxyreste mit 1 bis 20 Kohlenstoffatomen oder substituierte oder unsubstituierte aromatische Kohlenwasserstoff- oder Kohlenwasserstoffoxyreste mit 6 bis 20 Kohlenstoffatomen,
- **p**: eine ganze Zahl von 0 bis 3.000,
- **q**: eine ganze Zahl von 0 bis 50,
- **r**: eine ganze Zahl ≥ 0 und
- **t**: eine ganze Zahl ≥ 1
bedeuten, die durch die Reaktion von cyclischen Estern der allgemeinen Formel (IV) 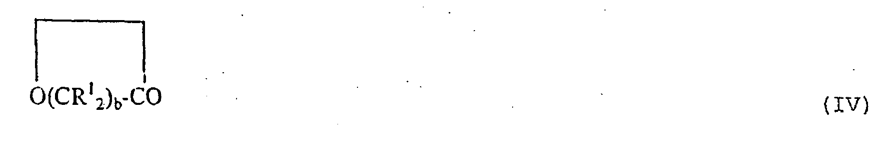 worin **R¹** die zuvor genannte Bedeutung hat und
- **b**: eine ganze Zahl von 3 bis 10 bedeutet,
mit Siloxanen der allgemeinen Formeln (V) erhalten werden,

R³₂SiO_{2/2})ₚ(R³₃SiO_{1/2})_{q}[O_{1/2}H]ᵣ[O_{1/2}SiR⁴₂-R²-X-H]ₜ (V)

worin X, R², R³, R⁴, p, q, r und t die zuvor genannte Bedeutung aufweisen ,
dadurch gekennzeichnet, dass die Verbindung der allgemeinen Formel (V) durch Reaktion der Verbindung der allgemeinen Formel (VI)

(R³₂Si_{2/2})ₚ(R³₃SiO_{1/2})_{q}[O_{1/2}H]ₛ (VI)

mit einer cyclischen Verbindung der allgemeinen Formel (VII) 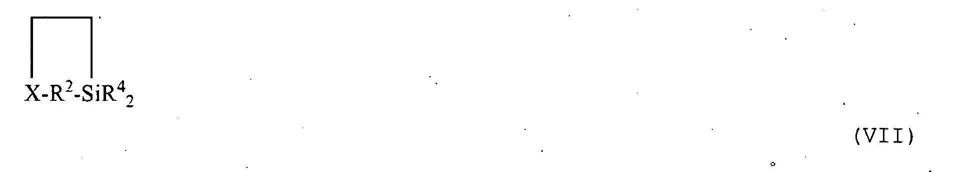 oder deren Polymerisationsprodukten hergestellt wird, worin **X, R², R³, R⁴, p** und **q** die zuvor genannte Bedeutung haben und **s** eine ganze Zahl ≥ 1 ist.

Verwendet man Verbindungen der allgemeinen Formel (VII), so reagieren diese leicht und gezielt mit guten Ausbeuten mit Silanol-Endgruppen.

Verbindungen der allgemeinen Formel (VII) sind stabil, lagerfähig, lassen sich aus einfachen Vorstufen sehr leicht beispielsweise gemäß der deutschen Offenlegungsschrift DE 15 93 867 A1 synthetisieren und eignen sich deshalb besonders gut für den Einsatz in industriellem Maßstab.

Die C₁-C₂₀-Kohlenwasserstoffreste und C₁-C₂₀-Kohlenwasserstoffoxyreste **R³, R⁴** können aliphatisch gesättigt oder ungesättigt, aromatisch, geradkettig oder verzweigt sein. **R³, R⁴** weisen vorzugsweise 1 bis 12 Atome, insbesondere 1 bis 6 Atome, vorzugsweise nur Kohlenstoffatome, oder ein Alkoxysauerstoffatom und sonst nur Kohlenstoffatome auf.

Vorzugsweise sind **R³, R⁴** geradkettige oder verzweigte C₁-C₆-Alkylreste oder Phenylreste. Besonders bevorzugt sind die Reste Methyl, Ethyl, Phenyl, Vinyl und Trifluorpropyl.
Bevorzugt werden die Verbindungen der allgemeinen Formel (V) hergestellt, bei denen **R³** einen Methylrest oder Vinylrest bedeutet und **R⁴** einen Methylrest bedeutet.

In einer bevorzugten Ausführungsform ist zumindest ein Rest **R³** oder **R⁴** in der allgemeinen Formel ein ungesättigter Alkylrest mit 1 bis 6 Kohlenstoffatomen und besonders bevorzugt ein Vinyl- oder Allylrest. Somit werden erstmals Polyester-Polysiloxan-Blockcopolymere der allgemeinen Formel (I) zugänglich, die in den Siliconanteilen ungesättigte und damit reaktive Alkylreste aufweisen. Diese Polyester-Polysiloxan-Blockcopolymere sind ebenfalls Gegenstand dieser Erfindung und ermöglichen beispielsweise ein weiteres Einvernetzen der Polyester-Polysiloxan-Blockcopolymere in einer Matrix oder auf einer Oberfläche.

Bevorzugt wird **a** aus der Gruppe enthaltend 1 und 2 ausgewählt. Die erfindungsgemäß hergestellten Verbindungen der allgemeinen Formel (I) können linear oder verzweigt sein.

Die Werte von **n** betragen bevorzugt höchstens 6 und besonders bevorzugt 4 oder 5.

Index **m** weist bevorzugt Werte von höchstens 200 und besonders bevorzugt Werte von 1 bis 100 auf.

Die Summe von (**p** + **q** + **s** + **t**) ist vorzugsweise eine Zahl von 3 bis 20000 und insbesondere eine Zahl von 5 bis 1000.

Eine bevorzugte Ausführungsform für ein Organosiloxan der allgemeinen Formel (III) ist ein lineares Siliconpolymer mit **p** größer oder gleich 1, **q** und **r** gleich 0 und t gleich 2. Eine weiterhin bevorzugte Ausführungsform für ein Organosiloxan der allgemeinen Formel (III) ist ein lineares Siliconpolymer mit **p** größer oder gleich 1, **q** gleich 1, **r** gleich 0 und t gleich 1. Dabei können die bevorzugten Organosiloxane der allgemeinen Formel (III) entweder monomodal oder multimodal verteilt sein, gleichzeitig können sie in einer engen oder sehr breiten Verteilung vorliegen.

Bei der cyclischen Verbindung der allgemeinen Formel (VII) handelt es sich bevorzugt um einen fünf- bis siebengliedrigen Ring, welcher neben dem guten synthetischen Zugang gleichzeitig auch eine gute Reaktivität gegenüber Silanolgruppen aufweist.

Vorzugsweise werden als Verbindungen der allgemeinen Formel (VII) Verbindungen der allgemeinen Formel (VIII) 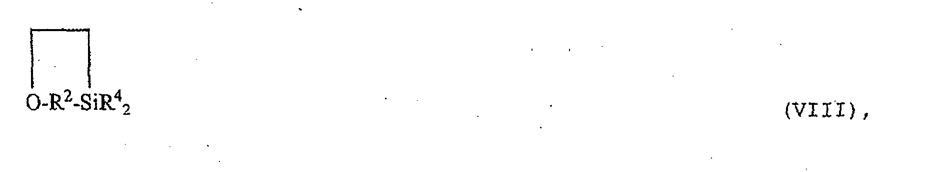 eingesetzt, bei denen
**R², R⁴** und die vorstehenden Bedeutungen aufweisen. Bevorzugt ist dabei **R⁴** ein Methylrest und **R²** ein bivalenter Propyl- oder Butylrest, bei denen eine Methylengruppe durch ein Sauerstoffatom ersetzt sein kann. Ganz besonders bevorzugt ist **R²** ein bivalenter Propylrest oder ein bivalenter -CH₂-CH₂-O-CH₂-Rest.

Ebenso bevorzugt werden als Verbindungen der allgemeinen Formel (VII) Verbindungen der allgemeinen Formel (IX) 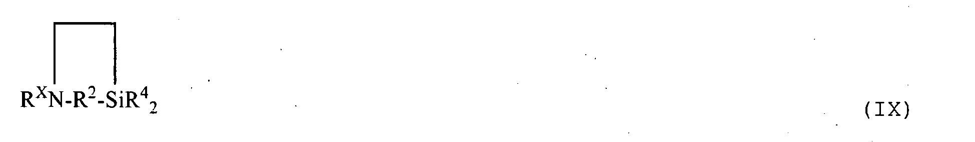 eingesetzt, bei denen

**R^{x}, R⁴** die vorstehenden Bedeutungen aufweisen und **R²** bevorzugt einen bivanlenten Propylen oder Butylenrest darstellt. Besonders bevorzugt bedeutet **R²** einen bivalenten Propylenrest, **R⁴** einen Methylrest und **R^{x}** Wasserstoff oder einen -Si(Me)₂-C₃H₆-NH₂ - Rest.

Das Verfahren zur Herstellung der Verbindungen der Formel (V) kann unkatalysiert bevorzugt bei Temperaturen von 0°C bis 200°C durchgeführt werden. Bevorzugt werden jedoch Reaktionstemperaturen von mindestens 20°C verwendet. Das Verfahren kann jedoch noch verbessert werden, indem man bestimmte Katalysatoren zusetzt. Diese Katalysatoren sind saure oder basische Verbindungen und führen dazu, dass sowohl Reaktionszeiten als auch Reaktionstemperaturen verringert werden können.

Der verwendete Katalysator ist dabei eine anorganische oder organische Lewis-Säure oder Lewis-Base, wie beispielsweise organische Brönstedt Säure oder Base, eine Organometallverbindung oder ein Halogenid-Salz. Als bevorzugte Säuren werden Carbonsäuren, teilveresterte Carbonsäuren, insbesondere Monocarbonsäuren, vorzugsweise Ameisensäure oder Essigsäure oder unveresterte oder teilveresterte mono-, oligo- oder Polyphosphorsäuren verwendet. Als bevorzugte Basen kommen vorzugsweise Alkylammoniumhydroxide, Alkylammoniumsilanolate, Ammoniumalkoxide, Alkylammoniumfluoride, Aminbasen oder Metallalkoholate oder Metallalkyle zum Einsatz. Bevorzugte Metallalkoholate sind Lithium oder Natriumalkoholate. Bevorzugte Organometallreagenzien sind Organo-Zinnverbindungen, Organo-Zinkverbindungen oder Alkoxy-Titanverbindungen oder Organolithiumverbindungen bzw. Gringardreagenzien. Bevorzugte Salze sind Tetraalkylammoniumfluoride.

Die verwendeten Katalysatoren werden nach der Funktionalisierungsreaktion der Silanol-Gruppen vorzugsweise durch Zugabe von so genannten Anti-Katalysatoren oder Katalysator-Giften deaktiviert, bevor sie zu einer Spaltung der Si-O-Si-Gruppen führen können. Diese Nebenreaktion ist abhängig vom verwendeten Katalysator.und muss nicht notwendigerweise eintreten, so dass auf eine Deaktivierung auch verzichtet werden kann. Beispiele für Katalysator-Gifte sind bei der Verwendung von Basen beispielsweise Säuren und bei der Verwendung von Säure beispielsweise Basen, was im Endeffekt zu einer einfachen Neutralisationsreaktion mit entsprechenden Neutralisationsprodukten führt, die gegebenenfalls abfiltriert oder extrahiert werden können. Das entsprechende Reaktionsprodukt zwischen Katalysator und Katalysator-Gift kann je nach Verwendung des Produktes entweder aus dem Produkt entfernt werden oder im Produkt verbleiben.

Bei dem Verfahren zur Herstellung von Verbindungen der allgemeinen Formel (V) ist die Menge der eingesetzten Verbindung mit Einheiten der allgemeinen Formel (VII) abhängig von der Anzahl **r** der zu funktionalisierenden Silanol-Gruppen im Organosiloxan der allgemeinen Formel (VI). Will man jedoch eine vollständige Funktionalisierung der OH-Gruppen erreichen, so ist die Verbindung mit Einheiten der allgemeinen Formel (VII) in mindestens äquimolaren Mengen zuzugeben. Verwendet man Verbindung mit Einheiten der allgemeinen Formel (VII) im Überschuss, so kann nicht abreagierte Verbindung im Anschluss entweder abdestilliert werden oder hydrolysiert und gegebenenfalls ebenfalls abdestilliert werden.

Das Verfahren kann dabei sowohl unter Einbeziehung von Lösungsmitteln als auch ohne die Verwendung von Lösungsmitteln in geeigneten Reaktoren durchgeführt werden. Dabei wird gegebenenfalls unter Vakuum oder unter Überdruck oder bei Normaldruck (0,1 MPa) gearbeitet.

Bei der Verwendung von Lösungsmitteln sind inerte, insbesondere aprotische Lösungsmittel wie aliphatische Kohlenwasserstoffe, wie beispielsweise Heptan oder Decan und aromatische Kohlenwasserstoffe wie beispielsweise Toluol oder Xylol bevorzugt. Ebenfalls können Ether, wie beispielsweise THF, Diethylether oder MTBE, verwendet werden. Die Menge des Lösungsmittels sollte ausreichen, um eine ausreichende Homogenisierung der Reaktionsmischung zu gewährleisten. Lösungsmittel oder Lösungsmittelgemische mit einem Siedepunkt bzw. Siedebereich von bis zu 120° C bei 0,1 MPa sind bevorzugt.

Der Verfahrensschritt zur Herstellung der Verbindungen der Formel (I) kann bei Temperaturen von 20°C bis 250°C durchgeführt werden. Bevorzugt werden jedoch Reaktionstemperaturen von mindestens 50°C verwendet.
Besonders bevorzugt lässt man zuerst bei relativ niedrigen Temperaturen von 50°C bis 100°C einen Teil des cyclischen Esters abreagieren, um die organofunktionelle Gruppe am Siloxan der allgemeinen Formel (V) durch die stattfindende Veresterung gegen thermischen Abbau zu stabilisieren. Danach erhöht man die Temperatur zur Erhöhung der Reaktionsgeschwindigkeit auf 100°C bis 200°C. Die Reaktionszeit ist stark abhängig von den verwendeten Katalysatoren. Hier werden für gewöhnlich die Katalysatoren verwendet, welche man in der Literatur für die Synthese von Caprolacton-Copolymeren verwendet. Dies sind vor allem Organo-Zinn-Verbindungen aber auch Alkoxy-TitanVerbindungen. Deren Menge liegt, bezogen auf die Gesamtmenge des Siliconcopolymeren, bei etwas 20 - 2000 ppm. Bevorzugt jedoch bei 100 - 1000 ppm. Die Reaktionszeit liegt bei etwa 0.5 bis 48 Stunden, bevorzugt jedoch bei 2-10 Stunden. Anschließend trennt man noch überschüssiges Caprolacton oder Siloxanverunreinigungen durch Destillation im Vakuum bei erhöhter Temperatur ab. Hierbei werden Drücke von unter 100 mbar und Temperaturen von über 100°C bevorzugt. Das Verfahren kann dabei sowohl unter Einbeziehung von Lösungsmitteln durchgeführt werden, oder aber auch ohne die Verwendung von Lösungsmitteln in geeigneten Reaktoren. Dabei wird gegebenenfalls unter Vakuum oder unter Überdruck oder bei Normaldruck (0,1 MPa) gearbeitet. Das Verfahren kann kontinuierlich oder diskontinuierlich durchgeführt werden.

Bei der Verwendung von Lösungsmitteln sind inerte, insbesondere aprotische Lösungsmittel wie aliphatische Kohlenwasserstoffe, wie beispielsweise Heptan oder Decan und aromatische Kohlenwasserstoffe wie beispielsweise Toluol oder Xylol bevorzugt. Die Menge des Lösungsmittels sollte ausreichen, um eine ausreichende Homogenisierung der Reaktionsmischung zu gewährleisten. Lösungsmittel oder Lösungsmittelgemische mit einem Siedepunkt bzw. Siedebereich von größer 100°C bei 0,1 MPa sind bevorzugt.

Alle vorstehenden Symbole der vorstehenden Formeln weisen ihre Bedeutungen jeweils unabhängig voneinander auf.

Die Blockcopolymere der vorliegenden Erfindung zeigen unterschiedliche herausragende Eigenschaften beim Einstellen des Polymerisationsgrades und des Verhältnisses von Polysiloxananteil zu aliphatischem Polyesterblock. Die erfindungsgemäßen Blockcopolymere können als solche oder als Additive in verschiedenen Harzen eine breite Anwendung finden. Aufgrund der chemischen Bindung von Polysiloxan und aliphatischen Polyestern zeigen die erfindungsgemäßen Blockcopolymere überraschend verbesserte Eigenschaften als einfache Mischungen der zugrunde liegenden Polymere. Darüber hinaus zeigen sie keine Ausblutungseffekte.

Das erfindungsgemäße Polyester-Polysiloxan-Copolymer als solches kann als Klebstoff, als Beschichtung, als Kosmetika, als Wachs, als Textilbehandlungsmitteln, als Additiv in Kunststoffen sowie bei mechanischen oder elektrischen Teilen, die einen nicht abrasiven oder Antirutscheffekt aufweisen müssen, als Schutzmittel mit abstoßender Wirkung, als Behandlungsmittel, als Wärmeleitpaste zusammen mit Füllstoffen, als wärmeregulierender Lack, als Schmierstoff und als Zwischenschicht oder Deckschicht für Flachbildschirme, Windschutzscheibe, Fensterglas und Sicherheitsglas verwendet werden.

Die erfindungsgemäßen Polyester-Polysiloxan-Copolymere lassen sich für die meisten bekannten Verwendungen von Polysiloxane ebenfalls einsetzen, dabei sind die Polyester-Polysiloxan-Copolymere jedoch aufgrund ihrer hohen Affinität zu Grundmaterialien durch die aliphatische Polyesterblöcke den Polysiloxanen des Stands der Technik meist überlegen. Die überlegenden Eigenschaften der erfindungsgemäßen Polyester-Polysiloxan-Copolymere zeigen sich dabei in der Löslichkeit in verschiedenen Materialien, in der Vermeidung des Ausblutens während und nach der Formgebung, in der Verringerung von Migration, im nicht abrasiven Effekt, in der Gaspermeabilität, im geringen bioaktiven Effekt sowie weiterhin in der Eignung als Repellent in Niedrigtemperaturanwendungen und der Überstreichbarkeit.

Für den Fall, dass der Hauptbestandteil der erfindungsgemäßen Polyester-Polysiloxan-Copolymere ein aliphatischer Polyesterblock ist und das Blockcopolymer als solches verwendet wird, so kann dieses beispielsweise in bioabbaubaren Harzen, als antithrombotisches Mittel, als galvanisches Auftragungsmittel, in nicht vergilbenden Farben, als Zwischen- oder Oberflächenbeschichtung für Fahrzeuge, als Binder und/oder Additiv für unterschiedliche Farben und Beschichtung sowie als Repellent verwendet werden. Das erfindungsgemäße Polyester-Polysiloxan-Copolymer kann die Oberflächeneigenschaften, wie beispielsweise die Wasserabweisung, den nicht abrasiven Effekt, das Anti-blocking, den Schlüpfeffekt, die Wetterbeständigkeit, die Gaspermeabilität und die Biobeständigkeit, verbessern.

Darüber hinaus kann das erfindungsgemäße Polyester-Polysiloxan-Copolymer als Additiv die unterschiedliche wärmehärtbare Harze in ihren Eigenschaften verbessern. Beispiele für solche Harze, in denen die Polyester-Polysiloxan-Copolymere als Additiv zugesetzt werden können, sind Epoxyharze, Polyurethane, Polyharnstoffe, Polyamide, bromierte Epoxyharze, ungesättigte Polyesterharze, Polyester-Polyethercopolymer, Polyimide, Melaminharze, Phenolharze, Dialylphtalatharze sowie deren Derivate. Derartige mit den erfindungsgemäßen Polyester-Polysiloxan-Copolymeren modifizierte wärmehärtbaren Harze sind vielfältig anwendbar, beispielsweise als Metallersatz in der Automobilindustrie, als Getriebegehäuse oder als Bürstenhalter, für elektrische und elektronische Teile, als Trennschalter, magnetische Schalten, Kollektoren, Klemmenleisten, Verbindungen, Relais und IFTs, elektrische Komponenten, wie beispielsweise Steckdosen and Zündspulkappen für Automobile, Schiffe oder Flugzeuge, zur Ummantelung von Werkzeugen, Sportgeräten und andere Geräte, zur elektrische Isolierung, als Leiterplatten, als magnetische Bänder, für Photofilme, Farben, Klebstoffe und Laminierungsmaterialien sowie als Vergussmassen. In diesen Verwendungen werden unterschiedliche Eigenschaften durch die Addition der Polysiloxan- und aliphatischen Polyesterblöcke verbessert.

Beispiele für die Verwendung von mit erfindungsgemäßen Polyester-Polysiloxan-Copolymeren modifizierten Epoxyharzen sind elektrische und elektronische Bauteile, laminierte Leiterplatten, Kompositmaterialien, Farben, Klebstoffe, strukturierte Materialien und Anti-Korrosionapplikationen. Die Verbesserung der Materialeigenschaften derart modifizierter Epoxyharze zeigt sich signifikanter im Vergleich zur Zugabe von konventionelle Polysiloxanen, u. a. bedingt durch ihre hohe Affinität zu den Epoxyharzen. Durch die Modifikation von Epoxyharzen mit den erfindungsgemäßen Polyester-Polysiloxan-Copolymeren lassen sich vorwiegend der thermische Ausdehnungskoeffizient, die mechanischen Eigenschaften, wie beispielsweise Modul und Flexibilität, Klebrigkeit der Oberfläche, Fließfähigkeit der Zusammensetzung vor dem Verarbeiten bzw. der Formgebung, Wetterbeständigkeit, elektrische Leitfähigkeit und Glasübergangstemperatur verbessern, wodurch das Auslösen aus der Form nach Formgebung und die Formgebung selbst deutlich verbessert werden. Derartige Verbesserungen sind von Bedeutung für die Verwendung der Epoxyharze in der Verkapselung von LED, als Schutzlacke und - überzüge sowie als Beschichtungsmaterial.

Beispiele für die Verwendung von mit den erfindungsgemäßen Polyester-Polysiloxan-Copolymeren modifizierten Polyurethanen sind thermoplastische Elastomere, Urethanschäume, Klebstoffe, unterschiedliche Farben und Anstriche, Urethanfasern und Binder beispielsweise für Tinten. Die erfindungsgemäßen Polyester-Polysiloxan-Copolymere haben endständige Carbinolgruppen, die mit Isocyanaten reagieren können. Sie können daher auch als Reaktanten für Isocyanate eingesetzt werden, um spezifische Eigenschaften abgeleitet von den Polysiloxane- und/oder aliphatischen Polyesterblöcken zu erzielen.

Das erfindungsgemäße Polyester-Polysiloxan-Copolymer kann weiterhin als Additiv für thermoplastische Harze verwendet werden. Beispiele solcher thermoplastischer Harze sind Polyacrilonitril, Polymethacrylonitril, Polymethylacrylat, Polyacrylamid, Polymethacrylat, Polymethacrylateester und andere Acrylharze, Polystyrol, Polyester, Polyamid, Polyesteramid, thermoplastische Polyurethane, Polyvinylchlorid, Polycarbonat, Polyacetal, Polyvinylidenechlorid, Polyvinylalkohol, und Cellulosederivative. Das erfindungsgemäße Polyester-Polysiloxan-Copolymer verbessert dabei unterschiedliche Eigenschaften der zuvor genannten Thermoplasten, wie beispielsweise die Schlüpfrigkeit, die Wärembeständigkeit, die Schöagzähigkeit, die Wetterbeständigkeit, die Gaspermeabilität, die Überstreichbarkeit, die Elastizität, die Abriebfestigkeit und die Entformbarkeit der daraus resultierenden Formkörper aus der Spritz- oder Gießform. Aufgrund der hohen Transparenz des erfindungsgemäßen Polyester-Polysiloxan-Copolymers kann dieses vorzugsweise als Additiv für Kunststoffe eingesetzt werden, die Verwendung in Applikationen mit die hohen Ansprüchen an die Transparenz, wie beispielsweise LED oder Bildschirme, finden.

Als Additiv in organischen Thermoplasten kann das Siloxan-Polyester-Copolymer auch als Haftvermittlungsagenz zu vernetzenden Silikonkautschuken dienen.

In den folgenden Beispielen sind, falls jeweils nicht anders angegeben, alle Mengen- und Prozentangaben auf das Gewicht bezogen, alle Drücke 0,10 MPa (abs.) und alle Temperaturen 20°C. Alle Viskositäten wurden bei 25°C bestimmt.

### Beispiele

### Beispiel 1: (Herstellung von 2,2-Dimethyl-[1,4]dioxa-2-silacyclohexan; nicht erfindungsgemäß)

Ein Gemisch von 103,9 g (0,75 mol) Chlormethyldimethylmethoxysilan, 46,6 g (0,75 mol) Ethylenglycol und 200 ml 1,4 Diisopropylbenzol wurden auf 150°C erhitzt und 3 Stunden gerührt. Dabei wurden 24 g (0,75 mol) Methanol abdestilliert. Danach wurde bei 150°C langsam 138,8 g (0,75 mol) Tributylamin zugetropft. Nach dem Zutropfen wurden weitere 3 Stunden bei 150°C gerührt. Das entstandene Salz Tributylammoniumchlorid wurde abfiltriert. Das Filtrat wurde bei Normaldruck zweifach fraktioniert destilliert, wobei man bei der 132°C übergehenden Fraktion 26 g reines 2,2-Dimethyl-2-sila-1,4-dioxan (132,23 g/mol, 20 mmol) mit einer Ausbeute von 27% erhält.

### Beispiel 2:

20 g (22,3 mmol) eines bishydroxy-terminierten Polydimethylsiloxans mit einem Mn von 890 g/mol (bestimmt durch ¹H-NMR-Spektroskopie) wurden bei 60°C mit 5,9 g 2,2-Dimethyl-[1,4]dioxa-2-sila-cyclohexan (44,7 mmol) und 80 mg Lithiummethanolat -Lösung (10%-ig in Methanol) (300 ppm) umgesetzt. ¹H-NMR und ²⁹Si-NMR zeigten, dass nach 3 Stunden alle OH-Gruppen zu Hydroxyethylmethylether-Einheiten umgesetzt waren. Zurück blieb reines Bis(hydroxyethylmethylether)-terminiertes-Polydimethylsiloxan.

### Beispiel 3:

1100 g eines bishydroxy-terminierten Polydimethyl-siloxan mit einem Mn von 11000 g/mol (bestimmt durch OH-Zahl-Bestimmung) wurden bei 100°C mit 26,7 g (200 mmol) 2,2-Dimethyl-[1,4]dioxa-2-sila-cyclohexan und 3000 mg Lithiummethanolat (10%-ig in Methanol) (300 ppm) umgesetzt. Anschließend wurde der Katalysator durch Zugabe von schwach saurem Ionenaustauscherharz neutralisiert, welches danach abfiltriert wurde. ¹H-NMR und ²⁹Si-NMR zeigten, dass nach 7 Stunden alle OH-Gruppen zu Hydroxyethylmethylether-Einheiten umgesetzt waren. Zurück blieb reines Bis(hydroxyethylmethylether)-terminiertes-Polydimethylsiloxan.

### Beispiel 4:

260 g eines bishydroxy-terminierten Polydimethyl-siloxans mit einem Mn von 2600 g/mol (bestimmt durch ¹H-NMR-Spektroskopie) wurden bei 80°C mit 26,7 g (200 mmol) 2,2-Dimethyl-[1,4]dioxa-2-sila-cyclöhexan und 900 mg (300 ppm) Lithiummethanolat-Lösung (10%-ig in Methanol) umgesetzt. ¹H-NMR und ²⁹Si-NMR zeigten, dass nach 4 Stunden alle OH-Gruppen zu Hydroxyethylmethylether-Einheiten umgesetzt waren. Zurück blieb reines Bis(hydroxyethylmethylether)-terminiertes-Polydimethylsiloxan.

### Beispiel 5:

280 g eines bishydroxy-terminierten Polydimethylvinyl-siloxans mit einem Vinyl: Methyl -Verhältnis von 1 : 4 und einem Mn von 2800 g/mol (bestimmt durch ¹H-NMR-Spektroskopie) wurden bei 80°C mit 26,7 g (200 mmol) 2,2-Dimethyl-[1,4]dioxa-2-silacyclohexan und 900 mg (300 ppm) Lithiummethanolat -Lösung (10%-ig in Methanol) umgesetzt. ¹H-NMR und ²⁹Si-NMR zeigten, dass nach 4 Stunden alle OH-Gruppen zu Hydroxyethylmethylether-Einheiten umgesetzt waren. Zurück blieb reines Bis(hydroxyethylmethyl-ether)-terminiertes-Polydimethylvinylsiloxan.

### Beispiel 6:

27 g eines bishydroxy-terminierten Polymethyltrifluorpropylsiloxans mit einem Trifluorpropyl: Methyl -Verhältnis von 1 : 1 und einem Mn von 900 g/mol (bestimmt durch ¹H-NMR-Spektroskopie) wurden bei 80°C mit 7,9 g (60 mmol) 2,2-Dimethyl-[1,4]dioxa-2-sila-cyclohexan und 90 mg (300 ppm) Lithiummethanolat -Lösung (10%-ig in Methanol) umgesetzt. ¹H-NMR und ²⁹Si-NMR zeigten, dass nach 3 Stunden alle OH-Gruppen zu Hydroxyethylmethylether-Einheiten umgesetzt waren. Zurück blieb reines Bis(hydroxyethylmethylether)-terminiertes-Polymethyltrifluorpropylsiloxan.

### Beispiel 7:

33 g eines monohydroxy-terminierten Polydimethysiloxans mit einem Molgewicht von 1100 g/mol (30 mmol)(bestimmt durch ¹H-NMR-Spektroskopie) wurden bei 80°C mit 4,0 g (30 mmol) 2,2-Dimethyl-[1,4]dioxa-2-sila-cyclohexan und 120 mg (300 ppm) Lithiummethanolat -Lösung (10%-ig in Methanol) umgesetzt. ¹H-NMR und ²⁹Si-NMR zeigten, dass nach 3 Stunden alle OH-Gruppen zu Hydroxyethylmethylether-Einheiten umgesetzt waren. Zurück blieb reines Mono(hydroxyethylmethylether)-terminiertes-Polydimethylsiloxan.

### Beispiel 8:

1000 g Me-Siloxan (bishydroxy-terminiertes Polydimethyl-siloxan mit einem mittleren Molekulargewicht von 3000 g/mol) wurden bei Raumtemperatur mit 77,2 g N-((3-Aminopropyl)-dimethylsilyl)-2,2-dimethyl-1-aza-2-silacyclopentan umgesetzt. ¹H-NMR und ²⁹Si-NMR zeigten, dass nach 2 Stunden alle OH-Gruppen zu Aminopropyl-Einheiten umgesetzt waren und kein restliches N-((3-Aminopropyl)-dimethylsilyl)-2,2-dimethyl-1-aza-2-silacyclopentan mehr nachweisbar war.

### Beispiel 9:

100 g Silicon ÖL (bishydroxy-terminiertes Polydimethyl-siloxan mit einem mittleren Molekulargewicht von 13000 g/mol) wurden bei 50°C mit 1,8 g N-((3-Aminopropyl)-dimethylsilyl)-2,2-dimethyl-1-aza-2-silacyclopentan umgesetzt. ¹H-NMR und ²⁹Si-NMR zeigten, dass nach 2 Stunden alle OH-Gruppen zu Aminopropyl-Einheiten umgesetzt waren und kein restliches N-((3-Aminopropyl)-dimethylsilyl)-2,2-dimethyl-1-aza-2-silacyclopentan mehr nachweisbar war.

### Beispiel 10:

100 g Silicon ÖL (bishydroxy-terminiertes Polydimethyl-siloxan mit einem mittleren Molekulargewicht von 28000 g/mol)wurden bei 50°C mit 0,85 g N-((3-Aminopropyl)-dimethylsilyl)-2,2-dimethyl-1-aza-2-silacyclopentan umgesetzt. ¹H-NMR und ²⁹Si-NMR zeigten, dass nach 2 Stunden alle OH-Gruppen zu Aminopropyl-Einheiten umgesetzt waren und kein restliches N-((3-Aminopropyl)-dimethylsilyl)-2,2-dimethyl-1-aza-2-silacyclopentan mehr nachweisbar war.

### Beispiel 11-22:

Das jeweilige organofunktionelle Siloxan wurde mit ε-Caprolacton (Fa. Solva Caprolactones) vermischt. Anschließend wurden 500 ppm Dibutylzinnlilaurat hinzu gegeben und die Reaktionsmischung auf 70°C unter Rühren erwärmt und 1 Stunde bei dieser Temperatur gehalten. Daraufhin wurde auf 140°C erwärmt und 6 Stunden bei dieser Temperatur unter Rühren gehalten. Abschließend wurde im Hochvakuum (< 10 mbar) ca. 1 bis 2% der Reaktionsmischung entfernt (Siloxan-Cyclen sowie ε-Caprolacton). Das entsprechend erhaltene Copolymer wurde abschließend abgekühlt und granuliert. Der Siloxangehalt wurde mittels NMR und die Molgewichte mittels GPC bestimmt.

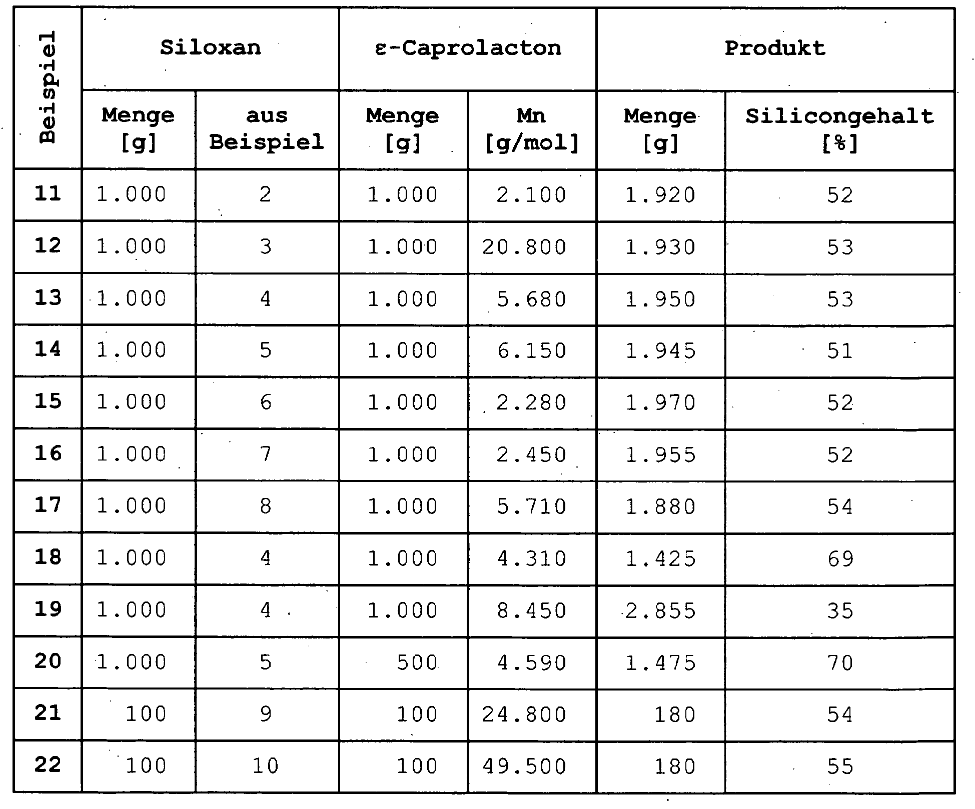

## Patentansprüche

1. Verfahren zur Herstellung von Polyester-Polysiloxan-Blockcopolymeren der allgemeinen Formel (I),
(A)ₐB (I)
worin
**a** eine ganze Zahl ≥ 1 ist,
**A** eine Polyestereinheit der allgemeinen Formel (II) bedeutet
H-[O-(CR¹₂)ₙ-CO-]ₘ-X-R²- (II)
worin
**X** Sauerstoff oder **NR^{x},**
**R¹** gleiche oder verschiedene, monovalente, substituierte oder unsubstituierte Kohlenwasserstoffreste oder Wasserstoff,
**R²** bivalente, substituierte oder unsubstituierte organische Kohlenwasserstoffreste mit 1 bis 40 Kohlenstoffatomen, wobei einzelne Kohlenstoffatome durch Sauerstoffatome ersetzt sein können,
**R^{x}** monovalente, substituierte oder unsubstituierte Kohlenwasserstoffreste mit 1 bis 20 Kohlenstoffatomen, wobei einzelne Kohlenstoffatome durch Sauerstoffatome ersetzt sein können, Wasserstoff oder -SiR'₂-R²-NR^{x}, worin **R'** gleiche oder verschiedene, monovalente, substituierte oder unsubstituierte Kohlenwasserstoffreste bedeuten,
**n** eine ganze Zahl von 3 bis 10 und
**m** eine ganze Zahl von 1 bis 1000
bedeuten, und
**B** eine Polysiloxaneinheit der allgemeinen Formel (III) bedeutet
R³₂SiO_{2/2})ₚ(R³₃SiO_{1/2})_{q}[O_{1/2}H]ᵣ[O_{1/2}SiR⁴₂]ₜ (III),
worin
**R³** gleiche oder verschiedene, substituierte oder unsubstituierte, aliphatisch gesättigte oder ungesättigte, lineare, cyclische oder verzweigte Kohlenwasserstoff- oder Kohlenwasserstoffoxyreste mit 1 bis 20 Kohlenstoffatomen oder substituierte oder unsubstituierte aromatische Kohlenwasserstoff- oder Kohlenwasserstoffoxyreste mit 6 bis 20 Kohlenstoffatomen,
**R⁴** gleiche oder verschiedene, substituierte oder unsubstituierte, aliphatisch gesättigte, lineare, cyclische oder verzweigte Kohlenwasserstoff- oder Kohlenwasserstoffoxyreste mit 1 bis 20 Kohlenstoffatomen oder substituierte oder unsubstituierte aromatische Kohlenwasserstoff- oder Kohlenwasserstoffoxyreste mit 6 bis 20 Kohlenstoffatomen,
**p** eine ganze Zahl von 0 bis 3.000,
**q** eine ganze Zahl von 0 bis 50,
**r** eine ganze Zahl ≥ 0 und
**t** eine ganze Zahl ≥ 1
bedeuten, die durch die Reaktion von cyclischen Estern der allgemeinen Formel (IV) 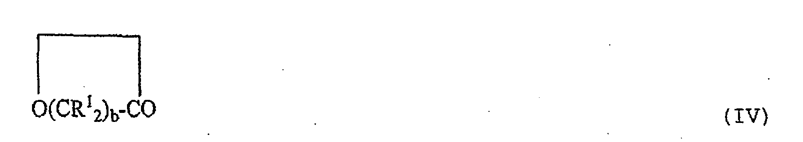 worin **R¹** die zuvor genannte Bedeutung hat und
**b** eine ganze Zahl von 3 bis 10 bedeutet,
mit Siloxanen der allgemeinen Formel (V) erhalten werden,
R³₂SiO_{2/2})ₚ(R³₃SiO_{1/2})_{q}[O_{1/2}H]ᵣ[O_{1/2}SiR⁴₂-R²-X-H]ₜ (V)
worin **X, R², R³, R⁴, p, q, r** und t die zuvor genannte Bedeutung aufweisen,
**dadurch gekennzeichnet, dass** die Verbindung der allgemeinen Formel (V) durch Reaktion der Verbindung der allgemeinen Formel (VI)
(R³₂Si_{2/2})ₚ(R³₃SiO_{1/2})_{q}[O_{1/2}H]ₛ (VI)
mit einer cyclischen Verbindung der allgemeinen Formel (VII) 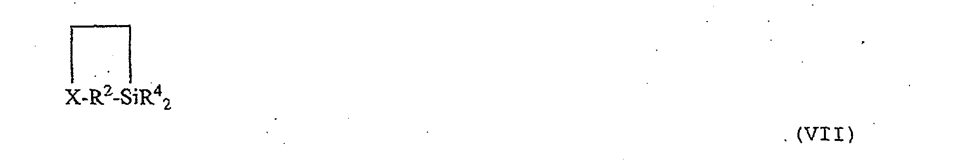 oder deren Polymerisationsprodukten hergestellt wird, worin **X, R², R³, R⁴, p** und **q** die zuvor genannte Bedeutung haben und **s** eine ganze Zahl ≥ 1 ist.

2. Verfahren nach Anspruch 1, **dadurch gekennzeichnet, dass a** den Wert 1 oder 2 hat.

3. Verfahren nach Anspruch 1 oder 2, **dadurch gekennzeichnet, dass** die Summe von (**p** + **q** + **s** + **t**) eine Zahl von 5 bis 1000 ist.

4. Verfahren nach einem der Ansprüche 1 bis 3, **dadurch gekennzeichnet, dass** als cyclische Verbindung der allgemeinen Formel (VII) eine Verbindung der allgemeinen Formel (VIII) 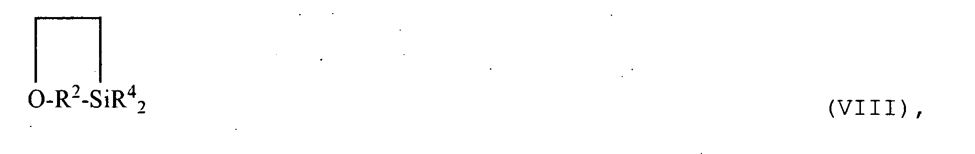 oder deren Polymerisationsprodukt eingesetzt wird, worin
**R²** ein bivalenter Propyl- oder Butylrest und
**R⁴** ein Methylrest ist,
mit der Maßgabe, dass in den Resten **R²** und **R⁴** eine Methylengruppe durch ein Sauerstoffatom ersetzt sein kann.

5. Verfahren nach einem der Ansprüche 1 bis 3, **dadurch gekennzeichnet, dass** als cyclische Verbindung der allgemeinen Formel (VII) eine Verbindung der allgemeinen Formel (IX) 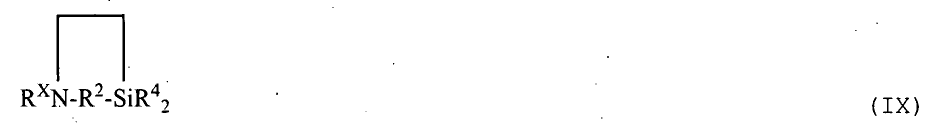 eingesetzt wird, worin
**R²** einen bivalenten Propylenrest,
**R⁴** einen Methylrest und
**R^{x}** Wasserstoff oder einen -Si(Me)₂-C₃H₆-NH₂ - Rest
bedeuten.

6. Verfahren nach einem der Ansprüche 1 bis 5, **dadurch gekennzeichnet, dass** im Verfahrensschritt zur Herstellung der Verbindung der allgemeinen Formel (V) ein Katalysator ausgewählt aus der Gruppe enthaltend anorganische oder organische Lewis-Säure oder Lewis-Base, organische Brönstedt Säure oder Base, Organometallverbindungen oder Halogenidsalze eingesetzt wird.

7. Verfahren nach einem der Ansprüche 1 bis 6, **dadurch gekennzeichnet, dass** im Verfahrensschritt zur Herstellung der Verbindung der allgemeinen Formel (I) eine Organo-Zinn-Verbindung als Katalysator verwendet wird.

8. Verfahren nach einem der Ansprüche 1 bis 7, **dadurch gekennzeichnet, dass** zumindest ein Rest **R³** oder **R⁴** in der allgemeinen Formel (III) ein ungesättigter Alkylrest mit 1 bis 6 Kohlenstoffatomen ist.

9. Verfahren nach Anspruch 8, **dadurch gekennzeichnet, dass** zumindest ein Rest **R³** oder **R⁴** in der.allgemeinen Formel (III) ein Vinyl- oder Allylrest.

10. Polyester-Polysiloxan-Blockcopolymer erhältlich durch ein Verfahren gemäß Anspruch 8 oder 9.

## Claims

1. Process for preparing polyester-polysiloxane block copolymers of the general formula (I),
(A)ₐB (I)
in which
**a** is an integer ≥ 1,
**A** denotes a polyester unit of the general formula (II)
H-[O-(CR¹₂)ₙ-CO-]ₘ-X-R²- (II)
in which
**X** denotes oxygen or **NR^{x},**
**R¹** denotes identical or different, monovalent, substituted or unsubstituted hydrocarbon radicals or hydrogen,
**R²** denotes divalent, substituted or unsubstituted organic hydrocarbon radicals having 1 to 40 carbon atoms, it being possible for individual carbon atoms to be replaced by oxygen atoms,
**R^{x}** denotes monovalent, substituted or unsubstituted hydrocarbon radicals having 1 to 20 carbon atoms, it being possible for individual carbon atoms to be replaced by oxygen atoms, or denotes hydrogen or -SiR'₂-R²-NR^{x}, in which **R'** denotes identical or different, monovalent, substituted or unsubstituted hydrocarbon radicals,
**n** denotes an integer from 3 to 10 and
**m** denotes an integer from 1 to 1000,
and
**B** denotes a polysiloxane unit of the general formula (III)
R³₂SiO_{2/2})ₚ(R³₃SiO_{1/2})_{q}[O_{1/2}H]ᵣ[O_{1/2}SiR⁴₂]ₜ (III),
in which
**R³** denotes identical or different, substituted or unsubstituted, aliphatically saturated or unsaturated, linear, cyclic or branched hydrocarbon or hydrocarbon-oxy radicals having 1 to 20 carbon atoms, or substituted or unsubstituted aromatic hydrocarbon or hydrocarbon-oxy radicals having 6 to 20 carbon atoms,
**R⁴** denotes identical or different, substituted or unsubstituted, aliphatically saturated, linear, cyclic or branched hydrocarbon or hydrocarbon-oxy radicals having 1 to 20 carbon atoms, or substituted or unsubstituted aromatic hydrocarbon or hydrocarbon-oxy radicals having 6 to 20 carbon atoms,
**P** is an integer from 0 to 3000,
**q** is an integer from 0 to 50,
**r** is an integer ≥ 0, and
**t** is an integer ≥ 1,
which are obtained through the reaction of cyclic esters of the general formula (IV) 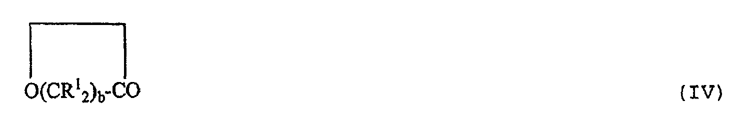 in which **R¹** is as defined above and
**b** denotes an integer from 3 to 10,
with siloxanes of the general formula (V)
R³₂SiO_{2/2})ₚ(R³₃SiO_{1/2})_{q}[O_{1/2}H]ᵣ[O_{1/2}SiR⁴₂-R²-X-H]ₜ (V)
in which **X, R², R³, R⁴, p, q, r,** and **t** are as defined above,
**characterized in that** the compound of the general formula (V) is prepared through reaction of the compound of the general formula (VI)
(R³₂Si_{2/2})ₚ(R³₃SiO_{1/2})_{q}[O_{1/2}H]ₛ (VI)
with a cyclic compound of the general formula (VII) 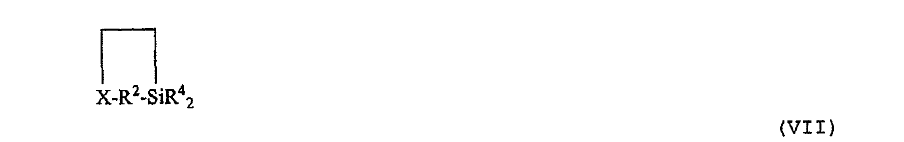 or polymerization products thereof, in which **X, R², R³, R⁴, p,** and **q** are as defined above and **s** is an integer ≥ 1.

2. Process according to claim 1, **characterized in that a** has the value 1 or 2.

3. Process according to claim 1 or 2, **characterized in that** the sum of (**p** + **q** + **s** + **t**) is a number from 5 to 1000.

4. Process according to any one of claims 1 to 3, **characterized in that** as a cyclic compound of the general formula (VII) a compound of the general formula (VIII) 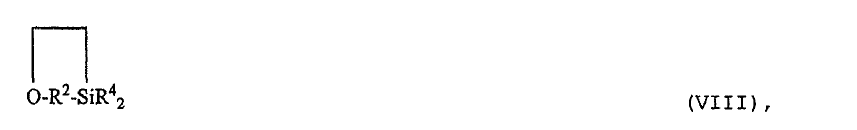 or polymerization product thereof is used in which
**R²** is a divalent propyl or butyl radical and
**R⁴** is a methyl radical,
with the proviso that in the radicals **R²** and **R⁴** it is possible for a methylene group to be replaced by an oxygen atom.

5. Process according to any one of claims 1 to 3, **characterized in that** as a cyclic compound of the general formula (VII) a compound of the general formula (IX) 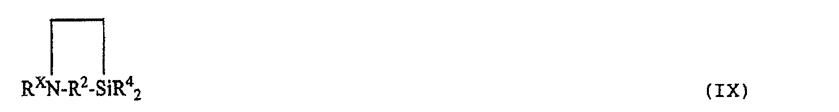 is used in which
**R²** is a divalent propylene radical,
**R⁴** is a methyl radical, and
**R^{x}** is hydrogen or a -Si(Me)₂-C₃H₆-NH₂ radical.

6. Process according to any one of claims 1 to 5, **characterized in that** in the process step for the preparation of the compound of the general formula (V) a catalyst is used which is selected from the group containing organic or inorganic Lewis acid or Lewis base, organic Brönstedt acid or base, organometallic compounds or halide salts.

7. Process according to any one of claims 1 to 6, **characterized in that** in the process step for the preparation of the compound of the general formula (I) an organotin compound is used as catalyst.

8. Process according to any one of claims 1 to 7, **characterized in that** at least one radical **R³** or **R⁴** in the general formula (III) is an unsaturated alkyl radical having 1 to 6 carbon atoms.

9. Process according to claim 8, **characterized in that** at least one radical **R³** or **R⁴** in the general formula (III) is a vinyl or allyl radical.

10. Polyester-polysiloxane block copolymer obtainable by a process according to claim 8 or 9.

## Revendications

1. Procédé pour la préparation de copolymères séquencés polyester-polysiloxane de formule générale (I),
(A)ₐB (I)
dans laquelle
**a** est un nombre entier ≥ 1,
**A** représente un motif polyester de formule générale (II)
H-[O-(CR¹₂)ₙ-CO-]ₘ-X-R²- (II)
dans laquelle
**X** représente un atome d'oxygène ou **NR^{x},**
**R¹** représente des radicaux hydrocarbonés identiques ou différents, monovalents, substitués ou non substitués ou un atome d'hydrogène,
**R²** représente des radicaux organiques hydrocarbonés divalents, substitués ou non substitués, ayant de 1 à 40 atomes de carbone, des atomes de carbone individuels pouvant être remplacés par des atomes d'oxygène,
**R^{x}** représente des radicaux hydrocarbonés monovalents, substitués ou non substitués, ayant de 1 à 20 atomes de carbone, des atomes de carbone individuels pouvant être remplacés par des atomes d'oxygène, ou représente un atome d'hydrogène ou -SiR'₂-R²-NR^{x}, où **R'** représente des radicaux hydrocarbonés identiques ou différents, monovalents, substitués ou non substitués,
**n** représente un nombre entier allant de 3 à 10 et
**m** représente un nombre entier allant de 1 à 1 000, et
**B** représente un motif polysiloxane de formule générale (III)
R³₂SiO_{2/2})ₚ(R³₃SiO_{1/2})_{q}[O_{1/2}H]ᵣ[O_{1/2}SiR⁴₂]ₜ (III),
dans laquelle
**R³** représente des radicaux hydrocarbonés ou hydrocarbyloxy identiques ou différents, substitués ou non substitués, à saturation ou insaturation aliphatique, linéaires, cycliques ou ramifiés, ayant de 1 à 20 atomes de carbone ou des radicaux hydrocarbonés ou hydrocarbyloxy aromatiques identiques ou différents, substitués ou non substitués, ayant de 6 à 20 atomes de carbone,
**R⁴** représente des radicaux hydrocarbonés ou hydrocarbyloxy identiques ou différents, substitués ou non substitués, à saturation aliphatique, linéaires, cycliques ou ramifiés, ayant de 1 à 20 atomes de carbone ou des radicaux hydrocarbonés ou hydrocarbyloxy aromatiques identiques ou différents, substitués ou non substitués, ayant de 6 à 20 atomes de carbone,
**P** représente un nombre entier allant de 0 à 3 000,
**q** représente un nombre entier allant de 0 à 50,
**r** représente un nombre entier ≥ 0 et
**t** représente un nombre entier ≥ 1
qui sont obtenus par la réaction d'esters cycliques de formule générale (IV) 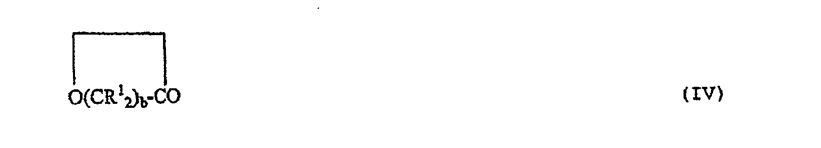 dans laquelle **R¹** a la signification donnée récédemment et
**b** représente un nombre entier allant de 3 à 10,
avec des siloxanes de formule générale (V)
R³₂SiO_{2/2})ₚ(R³₃SiO_{1/2})_{q}[O_{1/2}H]ᵣ[O_{1/2}SiR⁴₂-R²-X-H]ₜ (V)
dans laquelle **X, R², R³, R⁴, p, q, r** et **t** ont les significations données précédemment,
**caractérisé en ce que** le composé de formule générale (V) est préparé par mise en réaction du composé de formule générale (VI)
(R³₂Si_{2/2})ₚ(R³₃SiO_{1/2})_{q}[O_{1/2}H]ₛ (VI)
avec un composé cyclique de formule générale (VII) 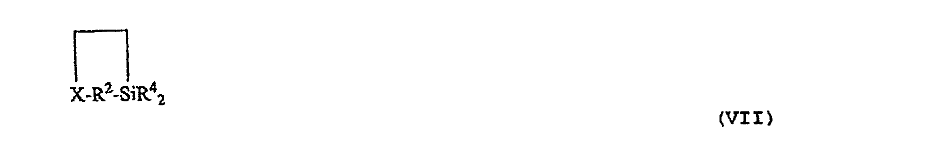 ou de leurs produits de polymérisation, formules dans lesquelles **X, R², R³, R⁴, p** et **q** ont les significations données précédemment et **s** est un nombre entier ≥ 1.

2. Procédé selon la revendication 1, **caractérisée en ce que a** a la valeur 1 ou 2.

3. Procédé selon la revendication 1 ou 2, **caractérisé en ce que** la somme de (**P** + **q** + **s** + **t**) est un nombre allant de 5 à 1 000.

4. Procédé selon l'une quelconque des revendications 1 à 3, **caractérisé en ce qu'**on utilise en tant que composé cyclique de formule générale (VII) un composé de formule générale (VIII) 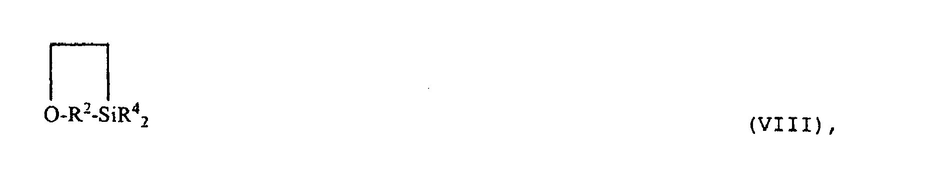 ou son produit de polymérisation, formule dans laquelle
R² est un radical propyle ou bytyle divalent et
R⁴ est un radical méthyle,
étant entendu que dans les radicaux **R²** et **R⁴** un groupe méthylène peut être remplacé par un atome d'oxygène.

5. Procédé selon l'une quelconque des revendications 1 à 3, **caractérisé en ce qu'**on utilise en tant que composé cyclique de formule générale (VII) un composé de formule générale (IX) 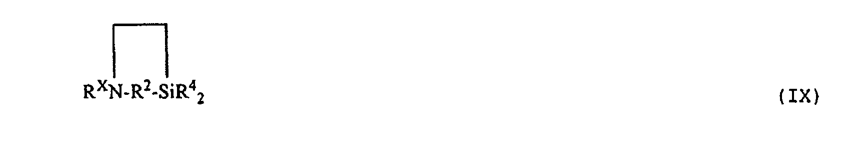 dans laquelle
**R²** représente un radical propylène divalent,
**R⁴** représente un radical méthyle et
**R^{x}** représente un atome d'hydrogène ou un radical -Si(Me)₂-C₃H₆-NH₂.

6. Procédé selon l'une quelconque des revendications 1 à 5, **caractérisé en ce que** dans l'étape du procédé pour la préparation du composé de formule générale (V) on utilise un catalyseur choisi dans le groupe comportant des acides de Lewis ou des bases de Lewis, organiques ou inorganiques, des acides ou des bases de Brönsted organiques, des composés organométalliques ou des halogénures.

7. Procédé selon l'une quelconque des revendications 1 à 6, **caractérisé en ce que** dans l'étape du procédé pour la préparation du composé de formule générale (I) on utilise comme catalyseur un composé organostannique.

8. Procédé selon l'une quelconque des revendications 1 à 7, **caractérisé en ce qu'**au moins un radical **R³** ou **R⁴** dans la formule générale (III) est un radical alkyle insaturé ayant de 1 à 6 atomes de carbone.

9. Procédé selon la revendication 8, **caractérisé en ce qu'**au moins un radical **R³** ou **R⁴** dans la formule générale (III) est un radical vinyle ou allyle.

10. Copolymère séquencé polyester-polysiloxane pouvant être obtenu par un procédé selon la revendication 8 ou 9.
